(19) **Europäisches Patentamt European Patent Office Office européen des brevets**

(11) **EP 3 214 015 B1**

(12) **EUROPEAN PATENT SPECIFICATION**

(45) Date of publication and mention of the grant of the patent:
**26.09.2018 Bulletin 2018/39**

(51) Int Cl.:
*B65D 65/40* (2006.01)     *B32B 27/00* (2006.01)
*B32B 27/30* (2006.01)     *B65D 75/30* (2006.01)
*B32B 27/16* (2006.01)     *B32B 27/32* (2006.01)
*B32B 27/08* (2006.01)     *B65D 75/00* (2006.01)
*B32B 37/14* (2006.01)

(21) Application number: **15855724.9**

(22) Date of filing: **27.10.2015**

(86) International application number:
**PCT/JP2015/080184**

(87) International publication number:
**WO 2016/068109 (06.05.2016 Gazette 2016/18)**

(54) **HEAT SHRINKABLE STRETCHED MULTILAYER FILM FOR SKIN PACKS, SKIN PACK PACKAGE USING SAME, AND METHOD FOR PRODUCING HEAT SHRINKABLE STRETCHED MULTILAYER FILM FOR SKIN PACKS**

WÄRMESCHRUMPFBARE GESTRECKTE MEHRSCHICHTFOLIE FÜR HAUTPACKUNGEN, HAUTPACKUNGSVERPACKUNG DAMIT UND VERFAHREN ZUR HERSTELLUNG VON WÄRMESCHRUMPFBARER GESTRECKTER MEHRSCHICHTFOLIE FÜR HAUTPACKUNGEN

FILM ÉTIRÉ MULTICOUCHE THERMORÉTRACTABLE POUR PELLIPLACAGES, PELLIPLACAGE UTILISANT LEDIT FILM, ET PROCÉDÉ DE PRODUCTION D'UN FILM ÉTIRÉ MULTICOUCHE THERMORÉTRACTABLE POUR PELLIPLACAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2014 JP 2014219423**

(43) Date of publication of application:
**06.09.2017 Bulletin 2017/36**

(73) Proprietor: **Kureha Corporation Chuo-ku Tokyo 103-8552 (JP)**

(72) Inventors:
 • **NAMBU, Shota Tokyo 103-8552 (JP)**
 • **TOBITA, Hisanori Tokyo 103-8552 (JP)**
 • **ITOH, Tadayoshi Tokyo 103-8552 (JP)**

(74) Representative: **BRP Renaud & Partner mbB Rechtsanwälte Patentanwälte Steuerberater Königstraße 28 70173 Stuttgart (DE)**

(56) References cited:
 **EP-A1- 1 176 002      EP-A1- 1 985 444 WO-A1-2007/094144    JP-A- 2010 167 765**

**Description**

TECHNICAL FIELD

The present invention relates to a shrinkable stretched multilayer film for skin packaging, a skin pack package using the same, and a method for producing a heat shrinkable stretched multilayer film for skin packaging.

BACKGROUND ART

In the field of food packaging, there has long been a desire for a packaging form of attractive appearance. Skin packaging is one such packaging form. Skin packaging is a method that involves inducing a transparent packaging film to wrap around a packaged article so as to cling closely about the contours of the product, and because the skin pack package is free from wrinkles, it is customarily used, for example, for packaging of foods such as bacon, sausage, ham, meat, cheese, and the like. The basic technique of skin packaging involves arranging on a bottom member (e.g., a flat plate-shaped base sheet of cardboard, plastic sheeting, or the like, or a molded article molded to prescribed shape from a flat plate-shaped base sheet) a product to be packaged, covering the product from above with a heat-softened plastic film (also called "skin film" hereinafter), and evacuating the air, inducing the skin film to cling closely to the contours of the product being packaged, as well as heat sealing the skin film and the bottom member together in the peripheral portions.

Heating vacuum packaging method has been known as one type of skin packaging. In the heating vacuum packaging method, a skin film is subjected to preliminary draw-molding in a vacuum mold while evacuating a chamber equipped with a hot plate of recessed shape having vacuum holes, then placing a product to be packaged on a bottom member that fits together with a recessed section formed by the draw-molding process, and while maintaining the draw-molded skin film in the heat-softened state without cooling, the peripheral portions of the recession and the bottom member are mated to cover the product being packaged, and the air pressure in the chamber is returned to normal pressure, thereby causing the skin film to cling closely to the contours of the product being packaged, while simultaneously heat sealing the skin film and the bottom member in the peripheral portions of the product being packaged.

Various multilayer films, such as a soft polyvinyl chloride resin (PVC)/polyvinylidene chloride resin (PVDC)/ethylene-vinyl acetate copolymer (EVA) laminated film (Japanese Examined Patent Application Publication No. 56-49206 (Patent Literature 1)); an EVA/PVDC/EVA laminated film (Japanese Examined Patent Application Publication No. 57-23607 (Patent Literature 2)); PVC/PVDC/polyolefin resin unstretched, co-extruded laminated films (Japanese Examined Patent Application Publication No. 6-2485 (Patent Literature 3)), Japanese Unexamined Patent Application Publication No. H9-216319 (Patent Literature 4); and an ionomer (Io)/EVA/polyamide (PA), ethylene-vinyl alcohol copolymer (EVOH)/PA/EVA/high-density polyethylene (HDPE) laminated film or polyethylene (PE)/EVA/PA/EVOH/PA/EVA/HDPE laminated film (WO 2011/138320) (Patent Literature 5)), are known as skin films employed in this sort of skin packaging. Also, European Patent Applications EP 1176002 A1 (Patent Literature 6) and EP 1985444 A1 (Patent Literature 7) disclose further suitable laminated mulitayer films for packaging.

CITATION LIST

Patent Literature

Patent Literature 1: Japanese Examined Patent Application Publication No. 56-49206B
Patent Literature 2: Japanese Examined Patent Application Publication No. 57-23607B
Patent Literature 3: Japanese Examined Patent Application Publication No. 6-2485B
Patent Literature 4: Japanese Unexamined Patent Application Publication No. H9-216319A
Patent Literature 5: WO 2011/138320
Patent Literature 6: European Patent Application Publication EP 1176002 A1
Patent Literature 7: European Patent Application Publication EP 1985444 A1

SUMMARY OF INVENTION

Technical Problem

While conventional multilayer films used in skin packaging have excellent skin pack moldability, the fitness of the multilayer film to the packaged article in skin-packaged packaging body was not always sufficient, and in particular, the fitness at corner sections of the packaged article was not always sufficient.

The present invention has been made in view of the above-mentioned problems of conventional technology, and an object of the present invention is to provide a multilayer film for skin packaging having ample moldability and fitness to packaged articles, and particularly excellent fitness at corner sections of packaged articles, as well as a production method thereof.

Solution to Problem

As a result of painstaking research directed to achieving the above-mentioned objective, the inventors discovered that a heat-shrinkable stretched multilayer film in which a crosslinked resin layer, a gas barrier resin layer, and a heat sealing resin layer are sequentially arranged in this order from the outer side is useful as a multilayer film for skin packaging, and completed the present invention.

Specifically, the heat shrinkable stretched multilayer film for skin packaging, comprising:a crosslinked resin layer;a gas barrier resin layer; and a heat sealing resin layer sequentially arranged from an outer side,the film having a dry thermal shrinkage rate of from 10% to 55% in each of a machine direction (MD) and of a transverse direction (TD) at 120°C in 30 seconds, and tensile elongation at break of 190% or greater in the machine direction (MD) at a tension rate of 500 mm/ min at 120°C,the multilayer film is obtained by stretching a multilayer film comprising a crosslinked resin layer; a gas barrier resin layer; and a heat sealing resin layer sequentially arranged from an outer side at a stretching ratio from 2.0 to 5.0 times in each of a machine direction (MD) and of a transverse direction (TD) and subsequent relaxation treatment at a temperature from 70° to 90°C and a relaxation rate from 25% to 45% in each of a machine direction (MD) and of a transverse direction (TD).

In preferred practice, the heat shrinkable stretched multilayer film for skin packaging has elongation recovery rate of from 90 to 100% in each of the machine direction and of the transverse direction at 120°C. Further, for the heat shrinkable stretched multilayer film for skin packaging of the present invention, the gas barrier resin layer is preferably a layer comprising a vinylidene chloride resin, and the crosslinked resin layer is preferably a layer comprising an olefin resin.

In addition, the skin pack package of the present invention is provided with a bottom member, a packaged article disposed on the bottom member, and the heat shrinkable stretched multilayer film for skin packaging of the present invention, arranged so as to cling closely to the packaged article.

Further, the method for producing the heat shrinkable stretched multilayer film for skin packaging of the present invention is a method for obtaining the heat shrinkable stretched multilayer film of the present invention by subjecting a stretched multilayer film in which a crosslinked resin layer, a gas barrier resin layer, and a heat sealing resin layer are sequentially arranged in this order from the outer side to relaxation treatment under conditions of a temperature of 70 to 90°C, and relaxation rate of 25% to 45% in each of the machine direction and of the transverse direction.

Advantageous Effects of Invention

According to the present invention, it is possible to obtain a multilayer film for skin packaging having high moldability and fitness to packaged articles, and particularly excellent fitness at corner sections of packaged articles.

Description of Embodiments

The present invention will be described in detail hereinafter in terms of the preferred embodiment.

Firstly, the heat shrinkable stretched multilayer film for skin packaging of the present invention will be described. The heat shrinkable stretched multilayer film for skin packaging of the present invention (hereinafter, also simply called "multilayer film for skin packaging of the present invention") includes a crosslinked resin layer, a gas barrier resin layer, and a heat sealing resin layer which are sequentially arranged in this order from the outer side, and may be optionally provided with an intermediate layer arranged between the crosslinked resin layer and the gas barrier resin layer, and/or between the gas barrier resin layer and the heat sealing resin layer. Additionally, adhesive layers may be arranged between layers.

Crosslinked resin layer

Examples of crosslinkable resins constituting the crosslinked resin layer of the present invention include olefin resins such as polyolefins obtained through polymerization using a single-site catalyst or metallocene catalyst (hereinafter, abbreviated as "SSC") (e.g., linear low-density polyethylene (SSC-LLDPE), linear very-low-density polyethylene (SSC-VLDPE), conventional polyolefins (e.g. linear low-density polyethylene (LLDPE), or very-low-density polyethylene (VLDPE or ULDPE)), ethylene-$\alpha$-olefin copolymers, ethylene-vinyl acetate copolymers (EVA), ethylene-acrylic ester copolymers (EAA), ethylene-methacrylate ester copolymers (EMA), ethylene methacrylate acrylic ester copolymers, and the like. Examples of the aforementioned ethylene-$\alpha$-olefin copolymers include copolymers that contain ethylene, and small quantities of $\alpha$-olefins having from 4 to 18 carbons (e.g., 1-butene, 1-pentene, 4-methylpentene, or 1-octene). Examples of the aforementioned ethylene-acrylic ester copolymers include ethylene-methyl acrylate copolymers, ethylene-ethyl acrylate copolymers, ethylene-butyl acrylate copolymers, and the like. Examples of ethylene-methacrylate ester copolymers include ethylene-methyl methacrylate copolymers, ethylene-ethyl methacrylate copolymers, ethylene-butyl methacrylate copolymers, and the like. Further, the vinyl acetate content in the ethylene-vinyl acetate copolymer is preferably from 5 to 30 mass%, the acrylic ester content of the ethylene-acrylic ester copolymer is preferably from 5 to 30 mass%, and the methacrylate ester content of the ethylene-methacrylate ester copolymer is preferably from 5 to 30 mass%. A single type of such a polyolefin resin may be used alone, or two or more types may be used in combination. Of these polyolefin resins, LLDPE, VLDPE or ULDPE, and ethylene-vinyl acetate copolymers are preferred from the perspective of stretchability.

Gas barrier resin layer

Examples of gas barrier resins constituting the gas barrier resin layer of the present invention include vinylidene chloride resins (PVDC), ethylene-vinyl alcohol copolymers (EVOH), polyamide resins, and the like. Of these gas barrier resins, PVDC is particularly preferred due to the low humidity dependence of the oxygen gas barrier properties of the resin. The aforementioned PVDC is a copolymer of 65 to 95 wt.% of vinylidene chloride, and 5 to 35 wt.% of at least one unsaturated monomer copolymerizable with the vinylidene chloride. Examples of unsaturated monomers copolymerizable with the vinylidene chloride include vinyl chloride, acrylonitrile, acrylic esters, and the like. Polyolefin resins such as EVA (regenerated multilayer film is acceptable), plasticizers, stabilizers, and the like may be added to the PVDC as necessary.

Heat sealing resin layer

Examples of heat sealing resins constituting the heat sealing resin layer of the present invention include ionomer resins, in addition to the olefin resins given as examples of the aforementioned crosslinkable resins. Of these heat sealing resins, ionomer resins or ethylene-vinyl acetate copolymers (EVA) is preferred from the perspective of sealing properties. Examples of ionomer resins include resins employing as the base polymer an ethylene-unsaturated carboxylic acid copolymer or ethylene-ethylenically unsaturated carboxylic acid-ethylenically unsaturated carboxylic ester ternary copolymer (preferably an ethylene-ethylenically unsaturated carboxylic acid-ethylenically unsaturated carboxylic ester ternary copolymer), in which the carboxyl groups in the copolymers have been neutralized by cations. The unsaturated carboxylic acid is preferably methacrylic acid or acrylic acid, and the unsaturated carboxylic ester is preferably an alkyl ester having from 1 to 6 carbons of methacrylic acid or acrylic acid. Additionally, the ternary copolymer is preferably ethylene-methacrylic acid (or acrylic acid)-methacrylic acid alkyl ester (or acrylic acid alkyl ester) such as ethylene-methacrylic acid-acrylic acid isobutyl ester.
Examples of the aforementioned cations include metal ions such as $Na^+$, $K^+$, $Li^+$, $Cs^+$, $Ag^+$, $Hg^+$, $Cu^+$, $Mg^{2+}$, $Zn^{2+}$, $Be^{2+}$, $Ca^{2+}$, $Ba^{2+}$, $Cu^{2+}$, $Cd^{2+}$, $Hg^{2+}$, $Sn^{2+}$, $Pb^{2+}$, $Fe^{2+}$, $Co^{2+}$, $Ni^{2+}$, $Al^{3+}$, $Sc^{3+}$, $Fe^{3+}$, $Y^{3+}$, organic amines, and the like. Of these cations, $Na^+$, $K^+$, $Ca^{2+}$, and $Zn^{2+}$ are preferable.

Intermediate layer

Examples of resins constituting the intermediate layers of the present invention include olefin resins given as examples of the aforementioned crosslinkable resins. Of these olefin resins, ethylene-vinyl acetate copolymers (EVA) are preferred from the perspective of the stretchability and pliability of the film.
Further, for the multilayer film for skin packaging of the present invention, it is preferable that at least one of the intermediate layer arranged between the crosslinked resin layer and the gas barrier resin layer, and the intermediate layer arranged between the gas barrier resin layer and the heat sealing resin layer, to be crosslinked; it is more preferable that at least the intermediate layer arranged between the crosslinked resin layer and the gas barrier resin layer to be crosslinked; and it is particularly preferable that both intermediate layers to be crosslinked. By so doing, the stretchability, heat resistance, and mechanical strength tend to be improved.

Adhesive layer

Adhesive layers may be arranged between layers in the multilayer film for skin packaging of the present invention. By joining the layers via adhesive layers, interlayer delamination can be minimized. Examples of resins constituting the adhesive layers of the present invention include EVA, EAA, EMA, unsaturated carboxylic acid-modified or metal-modified EAA or EMA, acid-modified VLDPE, acid-modified LLDPE, and the like. The vinyl acetate content of the EVA is preferably from 8 to 28 mass%, the acrylic ester content of the EAA is preferably from 8 to 28 mass%, and the methacrylate ester content of the EMA is preferably from 8 to 28 mass%.

Heat shrinkable stretched multilayer film for skin packaging

The heat shrinkable stretched multilayer film for skin packaging of the present invention includes a crosslinked resin layer, a gas barrier resin layer, and a heat sealing resin layer which are sequentially arranged in this order from the outer side, and is optionally provided with an intermediate layer arranged between the crosslinked resin layer and the gas barrier resin layer and/or between the gas barrier resin layer and the heat sealing resin layer.

For the multilayer film for skin packaging of the present invention, the dry thermal shrinkage rate (high-temperature dry thermal shrinkage rate) in each of the machine direction (MD) and of the transverse direction (TD) is from 10 to 55% at 120°C. If the high-temperature dry thermal shrinkage rate falls below the lower limit, the fitness of the multilayer film to the packaged article, and particularly the fitness at the corner sections of the packaged article, declines, whereas if the upper limit is exceeded, the skin-pack moldability declines. Further, from the perspective of improving the skin-pack moldability, the high-temperature dry thermal shrinkage rate is preferably from 10 to 35%, and more preferably from 10 to 30%.

In addition, for the multilayer film for skin packaging of the present invention, the tensile elongation at break (high-temperature tensile elongation at break) in the machine direction at 120°C is 190% or greater. If the high-temperature tensile elongation at break falls below the lower limit, the skin-pack moldability declines. Further, from the perspective of improving the skin-pack moldability, the high-temperature tensile elongation at break is preferably 195% or greater, more preferably 250% or greater, and particularly preferably 300% or greater. Note that while there is no particular upper limit for the high-temperature tensile elongation at break, a value of 500% or less is preferred.

In addition, for the multilayer film for skin packaging of the present invention, the elongation recovery rate (high-temperature elongation recovery rate) in each of the machine direction (MD) and of the transverse direction (TD) at 120°C is preferably from 90 to 100%. If the high-temperature elongation recovery rate falls below the lower limit, there is a tendency for the fitness to a packaged article, and particularly the fitness at the corner sections of the packaged article, to decline.

In addition, for the multilayer film for skin packaging of the present invention, from the perspective of skin-pack moldability, the tensile elongation at break at 23°C in each of the machine direction (MD) and of the transverse direction (TD) is preferably 240% or greater, more preferably 245% or greater, particularly preferably 350% or greater, and most preferably 450% or greater. Note that while there is no particular upper limit for the tensile elongation at break, a value of 600% or less is preferred.

Further, for the multilayer film for skin packaging of the present invention, from the perspective of skin-pack moldability, the 2.5% secant modulus in each of the machine direction (MD) and of the transverse direction (TD) is preferably from 75 to 130 MPa.

The thickness of the multilayer film for skin packaging of the present invention is ordinarily from 50 to 200 $\mu$m. With respect to the total thickness of the multilayer film for skin packaging of the present invention, the thickness of the crosslinked resin layer is preferably from 1 to 10%; the thickness of the gas barrier resin layer is preferably from 1 to 20%; and the thickness of the heat sealing resin layer is preferably from 10 to 30%. Further, the thickness of the intermediate layer is preferably from 10 to 50%, and in particular, the thickness of the intermediate layer arranged between the crosslinked resin layer and the gas barrier resin layer is preferably from 30 to 50%, while the thickness of the intermediate layer arranged between the gas barrier resin layer and the heat sealing resin layer is preferably from 10 to 30%. The thickness of the adhesive layer is preferably from 1 to 5%. If the total thickness of the multilayer film falls below the lower limit, there is a tendency for the mechanical strength of the multilayer film to decline, whereas if the upper limit is exceeded, there is a tendency for the skin-pack moldability and the fitness to packaged articles to decline.

Specific examples of the layer structure of the multilayer film for skin packaging of the present invention are as follows. The layer at the left side is the outermost layer, and the layer at the right side is the innermost layer.

(1) Olefin resin layer/PVDC layer/ionomer layer.
(2) Olefin resin layer/adhesive layer/PVDC layer/adhesive layer/ionomer layer.
(3) Olefin resin layer/adhesive layer/PVDC layer/adhesive layer/olefin resin layer.
(4) Olefin resin layer/adhesive layer/PVDC layer/adhesive layer/olefin resin layer/ionomer layer.
(5) Olefin resin layer/olefin resin layer/adhesive layer/PVDC layer/adhesive layer/olefin resin layer/ionomer layer.
(6) Olefin resin layer/olefin resin layer/adhesive layer/PVDC layer/adhesive layer/olefin resin layer/olefin resin layer.

Next, the method for producing a heat shrinkable stretched multilayer film for skin packaging of the present invention (hereinafter, also simply called "the method for producing a multilayer film for skin packaging of the present invention") will be described. The multilayer film for skin packaging of the present invention can be produced by subjecting a stretched multilayer film in which a crosslinked resin layer, a gas barrier resin layer, and a heat sealing resin layer are sequentially arranged in this order from the outer side to a relaxation treatment under prescribed conditions.

The stretched multilayer film used in the present invention can be produced by known methods. For example, using extruders corresponding in number to the number of laminated layers, in order to obtain a prescribed layer structure, the resins which constitute the crosslinked resin layer, the gas barrier resin layer, the heat sealing resin layer, and the optional intermediate layers and adhesive layers are extruded into cylindrical shape from an annular die and the obtained cylindrical object is biaxially stretched by an inflation method, or extruded into a planar shape by using a T-die and the obtained flat plate-shaped multilayer film is uniaxially or biaxially stretched by a tenter method, thereby, a stretched multilayer film endowed with heat-shrinkability can be obtained.

The stretching ratio is from 2.0 to 5.0 times in the machine direction (MD) and from 2.0 to 5.0 times in the transverse direction (TD). If the stretching ratio falls below the lower limit, there is a tendency for the bubble shoulder to become unstable during stretching, and film production to become unstable, whereas if the upper limit is exceeded, there is a tendency for film production properties to be diminished due to the whitening or rupture of the film as a result of excessive stretching.

In addition, during production of the stretched multilayer film, it is preferable to irradiate the multilayer film with radiation by a known method, either before stretching or after stretching. By so doing, the crosslinkable resin constituting the crosslinked resin layer, and the olefin resin constituting the intermediate layer (in particular, the intermediate layer arranged between the crosslinked resin layer and the gas barrier resin layer) become crosslinked, and the stretchability, heat resistance, and mechanical strength tend to improve. Examples of the radiation for irradiating the film include $\alpha$ rays, $\beta$ rays, electron beams, $\gamma$ rays, X-rays, and the like. Of these, from the perspective of obtaining a strong post-irradiation crosslinking effect as compared with before irradiation, electron beams and $\gamma$ rays are preferred and electron beams are more preferred.

In the case of irradiation with an electron beam, for example, the conditions for irradiation by radiation are preferably an acceleration voltage of from 150 to 500 kV, and a radiation dose of 10 to 200 kilograys (kGy). If the acceleration voltage and the radiation dose fall below the lower limits, there is a tendency for the crosslinked resin layer and the intermediate layer to not be crosslinked sufficiently, whereas if the upper limits are exceeded, in the case in which the gas barrier resin is a PVDC layer, there are instances in which the PVDC will degrade.

The method for producing a multilayer film for skin packaging of the present invention involves carrying out a relaxation treatment under prescribed conditions on a stretched multilayer film obtained in this manner. By so doing, a heat-shrinkable stretched multilayer film having high-temperature dry thermal shrinkage rate within a prescribed range, is obtained. Further, for the heat-shrinkable stretched multilayer films obtained in this way, the high-temperature tensile elongation at break and the high-temperature elongation recovery rate also tend to satisfy prescribed conditions.

The temperature during relaxation treatment according to the present invention is from 70 to 90°C. If the temperature during relaxation treatment falls below the lower limit, the film will not be imparted with the prescribed high-temperature dry thermal shrinkage rate and high-temperature tensile elongation at break, and skin-pack moldability is diminished, whereas if the upper limit is exceeded, instability occurs while heating during relaxation treatment, so that the film cannot be rolled up in a stable fashion. Further, from the perspective of improving the skin-pack moldability, the temperature during the relaxation treatment is preferably from 80 to 90°C. In cases in which the height of the heat treatment tower is 2 m, for example, the duration of relaxation treatment according to the present invention is preferably from 1 to 20 seconds of passage through the heat treatment tower.

The relaxation rate according to the present invention is from 25% to 45% in each of the machine direction (MD) and of the transverse direction (TD). If the relaxation rate falls below the lower limit, the film will not be imparted with the prescribed high-temperature dry thermal shrinkage rate and high-temperature tensile elongation at break, and skin-pack moldability is diminished, whereas if the upper limit is exceeded, the film will not be imparted with the prescribed high-temperature dry thermal shrinkage rate and high-temperature elongation recovery rate, and the fitness to packaged articles will be diminished. Further, from the perspective of improving the skin-pack moldability, the relaxation rate is from 25 to 45%.

Next, the skin pack package of the present invention will be described. The skin pack package of the present invention is provided with a bottom member, a packaged article disposed on the bottom member, and the heat shrinkable stretched multilayer film for skin packaging of the present invention, which is arranged so as to cling closely to the packaged article. The heat shrinkable stretched multilayer film for skin packaging of the present invention has excellent skin-pack moldability and fitness to packaged articles, and in particular, excellent fitness at corner sections of packaged articles, and is therefore suitable as a multilayer film for skin packaging of foods that have corner sections, for example, bacon, sausage, ham, meat, cheese, or the like, as the packaged article.

There are no particular limitations as to the bottom member used in the skin pack package of the present invention; for example, a general-purpose flat plate-shaped bottom member film (e.g., a flat plate-shaped base sheet of cardboard, plastic sheeting, or the like) could be used as the bottom member. Additionally, a molded article molded into a desired shape from such a flat plate-shaped bottom member film could be used as the bottom member.

Examples

The present invention will be described in detail more specifically hereinafter on the basis of examples and comparative examples, but the present invention is not limited to the following examples. The resins used in Examples and in Comparative Examples 1 to 7 are indicated below.

(1) Vinylidene chloride-vinyl chloride copolymer (PVDC)

"Vinylidene chloride-vinyl chloride copolymer" manufactured by KUREHA CORPORATION, density = 1.71 g/cm$^3$, melting point = 140°C.

(2) Linear very-low density polyethylene (VLDPE)

"MORETEC 0398CN" manufactured by Prime Polymer Co., Ltd., density = 0.907 g/cm$^3$, MFR (190°C) = 3.3 g/10 min, melting point = 117°C.

(3) Ethylene-vinyl acetate copolymer (18% EVA)

"Polene N8038F" manufactured by TPI Polene Public Company Limited, density = 0.941 g/cm$^3$, MFR (190°C) = 2.8 g/10 min, melting point = 85°C, vinyl acetate content = 18 mass%.

(4) Ethylene-vinyl acetate copolymer (15% EVA)

"Polene N8036" manufactured by TPI Polene Public Company Limited, density = 0.937 g/cm$^3$, MFR (190°C) = 2.3 g/10 min, melting point = 90°C, vinyl acetate content = 15 mass%.

(5) Ethylene-methyl acrylate copolymer (EMA)

18% EMA ("Elvaloy 1218AC" manufactured by DU PONT-MITSUI POLYCHEMICALS CO., LTD., density = 0.940 g/cm$^3$, MFR (190°C) = 2.0 g/10 min, melting point = 94°C, methyl acrylate content = 18 mass%) and 9% EMA ("Elvaloy 1209AC" manufactured by DU PONT-MITSUI POLYCHEMICALS CO., LTD., density = 0.927 g/cm$^3$, MFR (190°C) = 2.0 g/10 min, melting point = 101°C, methyl acrylate content = 9 mass%), mixed in proportions of 18% EMA : 9% EMA = 33 mass% : 67 mass%, were used.

(6) Ionomer resin (ionomer)

"Himilan AM79301" manufactured by DU PONT-MITSUI POLYCHEMICALS CO., LTD., density = 0.94 g/cm$^3$, MFR (190°C) = 2.8 g/10 min, melting point = 92°C.
The methods of measuring the physical properties of the multilayer films obtained in the examples and comparative examples are indicated below.

(1) Tensile strength at break and tensile elongation at break

A strip-shaped film sample 10 mm wide and 100 mm long was positioned in a Tensilon universal material testing machine ("RTC-1210 model" manufactured by ORIENTEC CORPORATION) (distance between clamps: 50 mm), and was stretched at a tension rate of 500 mm/min at a temperature of 23°C, measuring the stress (tensile strength at break) and elongation (tensile elongation at break) at the time the film sample broke, under conditions of 23°C and 50% RH. These measurements were taken in each of the machine direction (MD) and of the transverse direction (TD) of the multilayer film. Five test cycles were performed on each sample, designating the average values thereof as the tensile strength at break and the tensile elongation at break, values of which were calculated in each of the machine direction and of the transverse direction.

(2) 2.5% Secant modulus

A strip-shaped film sample 20 mm wide and 150 mm long was positioned in a Tensilon universal material testing machine ("RTC-1210 model" manufactured by ORIENTEC CORPORATION) (distance between clamps: 100 mm), and was stretched at a tension rate of 10 mm/min at a temperature of 23°C and 50% RH, measuring the stress when stretched to 2.5% elongation, and multiplying the obtained value by 40 to calculate a value. Five test cycles were performed on each sample, designating the average value thereof as the 2.5% secant modulus, values of which were calculated in each of the machine direction and of the transverse direction.

(3) High-temperature dry thermal shrinkage rate

A gear oven (manufactured by SHIMIZU SCIENTIFIC INSTRUMENTS MFG Co., Ltd.) in which a 3 mm thick corrugated cardboard had been spread out over a mesh rack was pre-adjusted to 120°C, a film sample obtained by making markings on the obtained multilayer film at distances of 100 mm in the machine direction (MD) and the transverse direction (TD) was placed in the oven, and the door was closed within 3 seconds. After holding the sample under measurement in the gear oven for 30 seconds, the film sample was removed and allowed to cool naturally, and the distances between the markings made thereon were measured, expressing as a percentage the proportion of the reduction in distance from 100 mm with respect to the original 100 mm length. Five test cycles were performed on each sample, designating the average value thereof as the high-temperature dry thermal shrinkage rate, values of which were calculated in each of the machine direction and of the transverse direction.

(4) High-temperature tensile elongation at break

A film sample 10 mm wide and 70 mm long was positioned in a Tensilon universal material testing machine ("RTC-1210 model" manufactured by ORIENTEC CORPORATION) (distance between clamps: 20 mm), held for 30 seconds in a constant-temperature vessel pre-adjusted to a temperature of 120°C, and thereafter stretched at a tension rate of 500 mm/min at a temperature of 120°C, measuring the elongation (tensile elongation at break) of the multilayer film in the machine direction (MD) at the time the film sample broke. Five test cycles were performed on each sample, designating the average value thereof as the high-temperature tensile elongation at break.

(5) High-temperature elongation recovery rate

A film sample 20 mm wide and 150 mm long was positioned in a Tensilon universal material testing machine ("RTC-1210 model" manufactured by ORIENTEC CORPORATION) (distance between clamps: 100 mm), held for 30 seconds in a constant-temperature vessel pre-adjusted to a temperature of 120°C, and thereafter stretched at a tension rate of 500 mm/min at a temperature of 120°C up to a measured displacement of 130 mm (130% elongation), and returned to the initial position at the same rate. The elongation recovery rate was calculated from the displacement at point time that the load reached zero ($X_{zero}$), using the following equation:

$$\text{elongation recovery rate } (\%) = (130 - X_{zero})/130 \times 100$$

Five test cycles were performed on each sample, designating the average value thereof as the high-temperature elongation recovery rate, values of which were calculated in each of the machine direction and of the transverse direction.

(6) Puncture strength

A film sample that was set on a hollow stage having a ring inner diameter of 44 mmφ was punctured in the center portion thereof at a speed of 50 mm/min at 23°C and 50% relative humidity, using a puncture jig having a distal-end curvature radius of 1 mm, and the maximum load was measured. Measurements were taken from each of the front side (from the crosslinked resin layer) and the back side (from the seal layer) of the multilayer film. Five test cycles were performed on each sample, designating the average value thereof as the puncture strength, values of which were calculated for each of the front side and the back side.

(7) Skin-pack moldability

Using a vacuum skin packaging machine ("R575CD" manufactured by MULTIVAC), a skin pack package was prepared under the following conditions, and the moldability was evaluated. A multilayer film slit to a width of 425 mm was used as the cover material (skin pack film), and a general-purpose bottom member film (PE/EVOH/PE, width 425 mm, thickness 350 μm) was used as the bottom member. Using a mold with a depth of 50 mm, length of 175 mm, and width of 275 mm, preheated to from 50 to 70°C as necessary, an artificial contained article made from rubber (height 40 mm, length 40 mm, width 115 mm) was skin-packaged at a mold temperature of 150 to 170°C. The moldability at this time was evaluated using the following criteria.

Moldability

A: Molding possible without preheating.
B: Molding possible if preheated.
C. Film ruptured, and molding was impossible, even with preheating.

(8) Fitness of skin pack package

Using a compact vacuum skin packaging machine (manufactured by Omori Machinery Co., Ltd.), a skin pack package was prepared under the following conditions, and the fitness was evaluated. A multilayer film cut to a size 300 mm long and 500 mm wide was used as the cover material (skin pack film), and a general-purpose bottom member film (PE/EVOH/PE, thickness 350 $\mu$m) cut to the same size as the cover material was used as the bottom member. Using a mold 18 mm deep, 120 mm long, and 245 mm wide, 3 slices of a commercially available cylindrical ham (thickness 10 mm) (about 45 g) was skin-packaged at a mold temperature of 110°C. The fitness at the corner sections of the packaging body obtained thereby was evaluated using the following criteria.

Fitness

A: Film clung closely to contained article without lifting.
B: Portions of film lifted up from contained article.
C: Film lifted up from bottom member at ends of contained article, forming wrinkles.

Reference Example 1

Six type of resins, namely, a polyvinylidene chloride-vinyl chloride copolymer (PVDC), a linear very-low density polyethylene (VLDPE), an ethylene-vinyl acetate copolymer having a vinyl acetate content of 18 mass% (18% EVA), an ethylene-vinyl acetate copolymer having a vinyl acetate content of 15 mass% (15% EVA), an ethylene-methyl acrylate copolymer (EMA), and an ionomer resin (ionomer) were extruded separately from six extruders, the molten resins were guided into a co-extrusion annular die and were fusion-joined in the order of VLDPE (5.5)/18% EVA (40.6)/EMA (2.7)/PVDC (12.1)/EMA (2.7)/15% EVA (18.2)/ionomer (18.2) from the outermost layer to the innermost layer, and coextruded as seven layers within the die, to obtain a cylindrical object. The numerical values in parentheses for each layer indicate the thickness of the layer as a proportion of total thickness (unit: %). The resin temperature of the fused cylindrical object at the die outlet was 200°C. The fused cylindrical object obtained thereby was cooled by showering in 10°C cold water, and a flattened cylindrical object having a flattened width of 196 mm and thickness of 608 $\mu$m was obtained.

The flattened cylindrical object was irradiated with an electron beam from the outside of the cylindrical object in an electron beam irradiation device having an acceleration voltage of 275KeV, to impart a radiation dose of 100 kilograys. Next, the cylindrical object was passed through an 85°C hot water tank, and subjected to simultaneous biaxial stretching by 3.40 times in the machine direction (MD) and 3.25 times in the transverse direction (TD) by an inflation method while being cooled by 11°C airing, to obtain a biaxially-stretched cylindrical object having a folded with of 637 mm and thickness of 55 $\mu$m.

Next, the biaxially-stretched cylindrical object so obtained was introduced into a heat treatment tower 2 m in cylindrical length, and passed through for 12 seconds while being heated to 70°C by steam, then subjected to relaxation treatment by 20% in the machine direction (MD) and 10% in the transverse direction (TD), obtaining a heat-shrinkable stretched multilayer cylindrical object 573 mm in width and 76 $\mu$m thick. Both lugs of this heat-shrinkable stretched multilayer cylindrical object were cut, and the object was wound up in the form of a heat-shrinkable stretched multilayer film 480 mm in width. The results of measurement of the physical properties of this heat-shrinkable, stretched multilayer film are shown in Table 1. Note that in this heat-shrinkable stretched multilayer film, the VLDPE layer and the 18% EVA layer were crosslinked.

Reference Example

A heat-shrinkable stretched multilayer cylindrical object 585 mm wide and 75 μm thick was obtained in the same manner as in Example 1, except that the temperature during the relaxation treatment was changed to 80°C, and the relaxation rate in the transverse direction (TD) was changed to 8%. In the same manner as in Example 1, both lugs of this cylindrical object were cut, and the object was wound up in the form of a heat-shrinkable stretched multilayer film 480 mm in width. The results of measurement of the physical properties of this heat-shrinkable stretched multilayer film are shown in Table 1.

Reference Example 3

A heat-shrinkable stretched multilayer cylindrical object 510 mm wide and 90 μm thick was obtained in the same manner as in Example 1, except that the relaxation rate in the machine direction (MD) was changed to 24%, and the relaxation rate in the transverse direction (TD) was changed to 20%. In the same manner as in Example 1, both lugs of this cylindrical object were cut, and the object was wound up in the form of a heat-shrinkable stretched multilayer film 480 mm in width. The results of measurement of the physical properties of this heat-shrinkable stretched multilayer film are shown in Table 1.

Reference Example 4

A heat-shrinkable stretched multilayer cylindrical object 503 mm wide and 94 μm thick was obtained in the same manner as in Example 1, except that the temperature during the relaxation treatment was changed to 80°C, the relaxation rate in the machine direction (MD) was changed to 26%, and the relaxation rate in the transverse direction (TD) was changed to 21%. In the same manner as in Example 1, both lugs of this cylindrical object were cut, and the object was wound up in the form of a heat-shrinkable stretched multilayer film 480 mm in width. The results of measurement of the physical properties of this heat-shrinkable stretched multilayer film are shown in Table 1.

Example 5

A heat-shrinkable stretched multilayer cylindrical object 446 mm wide and 116 μm thick was obtained in the same manner as in Example 1, except that the temperature during the relaxation treatment was changed to 80°C, the relaxation rate in the machine direction (MD) was changed to 32%, and the relaxation rate in the transverse direction (TD) was changed to 30%. One lug of this heat-shrinkable stretched multilayer cylindrical object was cut, and the object was opened and wound up in the form of a heat-shrinkable stretched multilayer film 480 mm in width. The results of measurement of the physical properties of this heat-shrinkable stretched multilayer film are shown in Table 1.

Example 6

A heat-shrinkable stretched multilayer cylindrical object 370 mm wide and 158 μm thick was obtained in the same manner as in Example 1, except that the temperature during the relaxation treatment was changed to 80°C, the relaxation rate in the machine direction (MD) was changed to 42%, and the relaxation rate in the transverse direction (TD) was changed to 40%. In the same manner as in Example 5, one lug of this cylindrical object was cut, and the object was opened and wound up in the form of a heat-shrinkable stretched multilayer film 480 mm in width. The results of measurement of the physical properties of this heat-shrinkable stretched multilayer film are shown in Table 1.

Example 7

A heat-shrinkable stretched multilayer cylindrical object 390 mm wide and 140 μm thick was obtained in the same manner as in Example 1, except that the temperature during the relaxation treatment was changed to 90°C, the relaxation rate in the machine direction (MD) was changed to 36%, and the relaxation rate in the transverse direction (TD) was changed to 39%. In the same manner as in Example 5, one lug of this cylindrical object was cut, and the object was opened and wound up in the form of a heat-shrinkable stretched multilayer film 480 mm in width. The results of measurement of the physical properties of this heat-shrinkable stretched multilayer film are shown in Table 1.

Example 8

A heat-shrinkable stretched multilayer film obtained in the same manner as in Example 7 was subjected to heat treatment by being passed for 3 minutes in a tensioned state through a dry heat furnace at 140°C. The thickness of the heat-shrinkable multilayer film was measured after heat treatment, and found to be 147 $\mu$m. The results of measurement of the physical properties of this heat-shrinkable stretched multilayer film are shown in Table 1.

Example 9

A heat-shrinkable stretched multilayer film obtained in the same manner as in Example 7 was subjected to heat treatment by being passed for 7 minutes in a tensioned state through a dry heat furnace at 140°C. The thickness of the heat-shrinkable multilayer film was measured after heat treatment, and found to be 162 $\mu$m. The results of measurement of the physical properties of this heat-shrinkable stretched multilayer film are shown in Table 1. The results of measurement of the physical properties of this heat-shrinkable stretched multilayer film are shown in Table 1.

Comparative Example 1

A biaxially-stretched cylindrical object having a folded width of 637 mm and thickness of 55 $\mu$m was obtained by simultaneous biaxial stretching in the same manner as in Example 1. Both lugs of the obtained biaxially-stretched cylindrical object, which did not undergo a relaxation treatment, were cut, and the object was wound up in the form of a heat-shrinkable stretched multilayer film 480 mm in width. The results of measurement of the physical properties of this heat-shrinkable stretched multilayer film are shown in Table 2.

Comparative Example 2

A heat-shrinkable stretched multilayer cylindrical object 620 mm wide and 59 $\mu$m thick was obtained in the same manner as in Example 1, except that the temperature during the relaxation treatment was changed to 60°C, the relaxation rate in the machine direction (MD) was changed to 4%, and the relaxation rate in the transverse direction (TD) was changed to 3%. In the same manner as in Example 1, both lugs of this cylindrical object were cut, and the object was wound up in the form of a heat-shrinkable stretched multilayer film 480 mm in width. The results of measurement of the physical properties of this heat-shrinkable stretched multilayer film are shown in Table 2.

Comparative Example 3

A heat-shrinkable stretched multilayer cylindrical object 616 mm wide and 61 $\mu$m thick was obtained in the same manner as in Example 1, except that the relaxation rate in the machine direction (MD) was changed to 7%, and the relaxation rate in the transverse direction (TD) was changed to 3%. In the same manner as in Example 1, both lugs of this cylindrical object were cut, and the object was wound up in the form of a heat-shrinkable stretched multilayer film 480 mm in width. The results of measurement of the physical properties of this heat-shrinkable stretched multilayer film are shown in Table 2.

Comparative Example 4

A heat-shrinkable stretched multilayer cylindrical object 594 mm wide and 67 $\mu$m thick was obtained in the same manner as in Example 1, except that the temperature during the relaxation treatment was changed to 80°C, the relaxation rate in the machine direction (MD) was changed to 12%, and the relaxation rate in the transverse direction (TD) was changed to 7%. In the same manner as in Example 1, both lugs of this cylindrical object were cut, and the object was wound up in the form of a heat-shrinkable stretched multilayer film 480 mm in width. The results of measurement of the physical properties of this heat-shrinkable stretched multilayer film are shown in Table 2.

Comparative Example 5

A heat-shrinkable stretched multilayer cylindrical object 574 mm wide and 67 $\mu$m thick was obtained in the same manner as in Example 1, except that the temperature during the relaxation treatment was changed to 60°C, and the relaxation rate in the machine direction (MD) was changed to 9%. In the same manner as in Example 1, both lugs of this cylindrical object were cut, and the object was wound up in the form of a heat-shrinkable stretched multilayer film 480 mm in width. The results of measurement of the physical properties of this heat-shrinkable stretched multilayer film are shown in Table 2.

Comparative Example 6

A heat-shrinkable stretched multilayer film obtained in the same manner as in Example 7 was subjected to heat treatment by being passed for 10 minutes in a tensioned state through a dry heat furnace at 140°C. The thickness of the heat-shrinkable multilayer film was measured after heat treatment, and found to be 160 $\mu$m. The results of measurement of the physical properties of this heat-shrinkable stretched multilayer film are shown in Table 2.

Comparative Example 7

A heat-shrinkable stretched multilayer film obtained in the same manner as in Example 6 was subjected to heat treatment a second time by being passed for 1 minute in a tensioned state through a dry heat furnace at 120°C. The thickness of the heat-shrinkable multilayer film was measured after heat treatment, and found to be 170 $\mu$m. The results of measurement of the physical properties of this heat-shrinkable stretched multilayer film are shown in Table 2.

Comparative Example 8

Non-shrinkable multilayer skin-pack films of the kind used in the past were prepared from the five types of resin indicated below.

(1) Linear very-low density polyethylene (VLDPE)

"MORETEC 0278G" manufactured by Prime Polymer Co., Ltd.

(2) Ethylene-vinyl acetate copolymer (19% EVA)

"Evaflex V430RC" manufactured by DU PONT-MITSUI POLYCHEMICALS CO., LTD.

(3) Adhesive polyolefin (ADMER)

"ADMER AT1707E" manufactured by Mitsui Chemicals Inc.

(4) Ethylene-vinyl alcohol copolymer (EVOH)

"Soarnol E3808" manufactured by The Nippon Synthetic Chemical Industry Co., Ltd., ethylene content = 38 mol%.

(5) Linear low-density polyethylene (LLDPE)

"EVOLUE SP0540" manufactured by Prime Polymer Co., Ltd.
Using seven extruders, the above-mentioned five types of resin materials were individually melt-kneaded, and after setting the draft ratio such that the layers of the multilayer film would have the thicknesses indicated below, a fused article having a seven-layer structure of LLDPE (15 gm)/19% EVA (50 $\mu$m)/ADMER (3 $\mu$m)/EVOH (8 $\mu$m)/ADMER (3 $\mu$m)/19% EVA (46 $\mu$m)/VLDPE (16 $\mu$m) in order from the outermost layer to the innermost layer was prepared by T-die co-extrusion, and quenched on a 40°C chilled roll, to obtain an unstretched multilayer film, having a draft such that total thickness was 141 $\mu$m. This unstretched multilayer film was crosslinked by irradiation with an electron beam. The results of measurement of the physical properties of the non-shrinkable unstretched multilayer skin-pack film so obtained are shown in Table 2. Note that all seven layers of this non-shrinkable unstretched multilayer skin-pack film were crosslinked.

[Table 1] Examples 1-4 are reference examples

| Puncture strength (N) (front/back) | 11.1/14.0 | 10.9/12.6 | 12.4/15.0 | 11.4/14.2 | 12.6/15.3 | 12.9/16.1 | 12.6/15.5 | 12.7/15.2 | 12.8/15.9 |
|---|---|---|---|---|---|---|---|---|---|
| Moldability | B | B | B | B | A | A | A | A | A |
| Fitness | A | A | A | A | A | A | A | A | A |

**13**

[Table 2]

| | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| Relaxation treatment temperature (°C) | - | 60 | 70 | 80 | 60 | 90 | 90 | - |
| Relaxation rate (%) (MD/TD) | - | 4/3 | 7/3 | 12/7 | 9/10 | 36/39 | 36/39 | - |
| Heat treatment (tensioned state) | - | - | - | - | - | 140°C×10min | 140°C×10min 120°C× 1min | - |
| Average thickness (μm) | 55 | 59 | 61 | 67 | 67 | 160 | 170 | 141 |
| 23°C tensile strength at break (MPa) (MD/TD) | 74/78 | 82/85 | 81/85 | 73/83 | 70/84 | 26/31 | 20/25 | 28/20 |
| 23°C tensile elongation at break (%) (MD/TD) | 178/221 | 221/194 | 232/200 | 230/240 | 267/224 | 485/463 | 452/452 | 552/582 |
| 2.5% secant modulus (MPa) (MD/TD) | 144/143 | 133/140 | 133/138 | 138/123 | 134/131 | 79/73 | 63/60 | 210/216 |
| 120°C dry thermal shrinkage rate (%) (MD/TD) | 63/53 | 57/60 | 54/57 | 58/58 | 57/58 | 7/9 | 0/0 | 0/0 |
| 120°C tensile elongation at break (%) (MD) | 174 | 162 | 185 | 170 | 147 | 382 | 482 | 428 |
| 120°C elongation recovery rate (%) (MD/TD) | 100/100 | 100/100 | 100/100 | 100/100 | 100/100 | 88/85 | 85/82 | 59/57 |
| Puncture strength (N) (front/back) | 10.7/11.8 | 11.3/13.6 | 10.5/13.2 | 10.4/10.4 | 10.9/13.5 | 12.8/15.8 | 13.2/16.6 | 9.3/9.4 |
| Moldability | C | C | C | C | C | A | A | A |
| Fitness | A | A | A | A | A | C | C | C |

As is clear from the results shown in Table 1, heat-shrinkable stretched multilayer films of the present invention (Examples 5 to 9), which exhibited dry thermal shrinkage rates at 120°C of 10 to 55% and tensile elongation at break at 120°C of 190% or greater in the machine direction, had high high-temperature elongation recovery rates, as well as good skin-pack moldability and fitness, and were found to be suitable as films for skin packaging.

On the other hand, as is clear from the results shown in Table 2, heat-shrinkable stretched multilayer films (Comparative Examples 1 to 5), which exhibited dry thermal shrinkage rates at 120°C exceeding 55% and tensile elongation at break at 120°C of less than 190% in the machine direction, were found to have poor skin-pack moldability. Moreover, a heat-shrinkable stretched multilayer film (Comparative Example 6) and non-shrinkable multilayer films (Comparative Examples 7 and 8) having dry thermal shrinkage rates at 120°C of less than 10% were found to have low high-temperature elongation recovery rates, and poor fitness.

Industrial Applicability

As described above, according to the present invention, it is possible to obtain a heat-shrinkable stretched multilayer film having good moldability and fitness to packaged articles, and in particular, excellent fitness at the corner sections of packaged articles.

Consequently, the heat shrinkable stretched multilayer film for skin packaging of the present invention has excellent fitness at the corner sections of packaged articles, and is therefore suitable as a multilayer film for skin packaging of foods that have corner sections, for example, bacon, sausage, ham, meat, cheese, or the like.

**Claims**

1. A heat shrinkable stretched multilayer film for skin packaging, comprising:

    a crosslinked resin layer;
    a gas barrier resin layer; and
    a heat sealing resin layer sequentially arranged from an outer side,
    the film having a dry thermal shrinkage rate of from 10% to 55% in each of a machine direction (MD) and of a transverse direction (TD) at 120°C in 30 seconds, and tensile elongation at break of 190% or greater in the machine direction (MD) at a tension rate of 500 mm/min at 120°C,
    the multilayer film is obtained by stretching a multilayer film comprising a crosslinked resin layer; a gas barrier resin layer; and a heat sealing resin layer sequentially arranged from an outer side at a stretching ratio from 2.0 to 5.0 times in each of a machine direction (MD) and of a transverse direction (TD) and subsequent relaxation treatment at a temperature from 70° to 90°C and a relaxation rate from 25% to 45% in each of a machine direction (MD) and of a transverse direction (TD).

2. The heat shrinkable stretched multilayer film for skin packaging according to claim 1, wherein the elongation recovery rate in each of the machine direction (MD) and of the transverse direction (TD) is from 90% to 100%, the elongation recovery rate being measured upon stretching at an tension rate of 500 mm/min at a temperature of 120°C up to a displacement of 130% elongation and returned to initial position at the same rate, with the elongation recovery rate being calculated from the displacement at the time the load reached zero ($x_{zero}$) using the following equation: elongation recovery rate (%) = (130- $x_{zero}$)/130 x 100.

3. The heat shrinkable stretched multilayer film for skin packaging according to claim 1 or 2, wherein the gas barrier resin layer is a layer comprising a vinylidene chloride resin.

4. The heat shrinkable stretched multilayer film for skin packaging according to any one of claims 1 to 3, wherein the crosslinked resin layer is a layer comprising an olefin resin.

5. A skin pack package comprising:

    a bottom member;
    a packaged article disposed on the bottom member; and
    the heat shrinkable stretched multilayer film according to any one of claims 1 to 4,
    the film being arranged so as to cling closely to the packaged article.

6. A method for producing a heat shrinkable stretched multilayer film for skin packaging to obtain the heat shrinkable stretched multilayer film according to any one of claims 1 to 4, the method comprising applying relaxation treatment, under conditions of temperature of 70 to 90°C and relaxation ratio of 25% to 45% in each of a machine direction and of a transverse direction, to a stretched multilayer film having a crosslinked resin layer, a gas barrier resin layer, and a heat sealing resin layer sequentially arranged from an outer side.

**Patentansprüche**

1. Wärmeschrumpfbare gestreckte Mehrschichtfolie für eine Hautpackung, umfassend:

   eine vernetzte Harzschicht;
   eine Gasbarriereharzschicht; und
   eine Wärmeversiegelungsharzschicht, die sequenziell von einer Außenseite aus angeordnet ist,
   wobei die Folie eine Trockenwärmeschrumpfungsrate von 10 % bis 55 % in jeder von einer Laufrichtung (MD) und einer Querrichtung (TD) bei 120 °C in 30 Sekunden und eine Zugbruchdehnung von 190 % oder mehr in der Laufrichtung (MD) bei einer Zugrate von 500 mm/min bei 120 °C aufweist,
   wobei die Mehrschichtfolie durch Strecken einer Mehrschichtfolie, die eine vernetzte Harzschicht, eine Gasbarriereharzschicht und eine Wärmeversiegelungsharzschicht umfasst, die sequenziell von einer Außenseite aus angeordnet ist, bei einem Streckverhältnis vom 2,0- bis 5,0-Fachen in jeder einer Laufrichtung (MD) und einer Querrichtung (TD) und anschließende Entspannungsbehandlung bei einer Temperatur von 70 °C bis 90 °C und einer Entspannungsrate von 25 % bis 45 % in jeder einer Laufrichtung (MD) und einer Querrichtung (TD) erhalten wird.

2. Wärmeschrumpfbare gestreckte Mehrschichtfolie für eine Hautpackung nach Anspruch 1, wobei die Dehnungserholungsrate in jeder der Laufrichtung (MD) und der Querrichtung (TD) von 90 % bis 100 % beträgt, wobei die Dehnungserholungsrate beim Strecken bei einer Zugrate von 500 mm/min bei einer Temperatur von 120 °C bis zu einer Verschiebung von 130 % der Dehnung und Rückkehr zur Ausgangsposition bei derselben Rate gemessen wird, wobei die Dehnungserholungsrate aus der Verschiebung bei dem Zeitpunkt, bei welchem die Last null erreicht hat ($x_{null}$), unter Verwendung der folgenden Gleichung berechnet wird:

$$\text{Dehnungserholungsrate (\%)} = (130 - x_{null})/130 \times 100.$$

3. Wärmeschrumpfbare gestreckte Mehrschichtfolie für eine Hautpackung nach Anspruch 1 oder 2, wobei die Gasbarriereharzschicht eine Schicht ist, die ein Vinylidenchloridharz umfasst.

4. Wärmeschrumpfbare gestreckte Mehrschichtfolie für eine Hautpackung nach einem der Ansprüche 1 bis 3, wobei die vernetzte Harzschicht eine Schicht ist, die ein Olefinharz umfasst.

5. Hautpackung, umfassend:

   ein Bodenelement;
   einen gepackten Artikel, der auf dem Bodenelement angeordnet ist; und
   die wärmeschrumpfbare gestreckte Mehrschichtfolie nach einem der Ansprüche 1 bis 4, wobei die Folie so angeordnet ist, dass sie fest an gepackten Artikel haftet.

6. Verfahren zum Produzieren einer wärmeschrumpfbaren gestreckten Mehrschichtfolie für eine Hautpackung nach einem der Ansprüche 1 bis 4, wobei das Verfahren das Anwenden von Entspannungsbehandlung unter Bedingungen einer Temperatur von 70 °C bis 90 °C und eines Entspannungsverhältnisses von 25 % bis 45 % in jeder einer Laufrichtung und einer Querrichtung auf eine gestreckte Mehrschichtfolie mit einer vernetzten Harzschicht, einer Gasbarriereharzschicht und einer Wärmeversiegelungsharzschicht, die sequenziell von einer Außenseite aus angeordnet ist, umfasst.

**Revendications**

1. Film étiré multicouche thermorétractable pour pelliplacages, comprenant :

une couche de résine réticulée ;

une couche de résine faisant barrière aux gaz ; et

une couche de résine de thermoscellage disposées de manière successive depuis un côté extérieur,

le film ayant un taux de thermorétractation à sec allant de 10 % à 55 % dans chaque direction parmi une direction de machine (MD) et une direction transversale (TD) à 120 °C pendant 30 secondes, et un allongement en traction à la rupture de 190 % ou plus dans la direction de machine (MD) à un taux d'allongement de 500 mm/min à 120 °C,

dans lequel

le film multicouche est obtenu en étirant un film multicouche comprenant une couche de résine réticulée, une couche de résine faisant barrière aux gaz ; et une couche de résine de thermoscellage disposées de manière successive depuis un côté extérieur à taux d'étirement allant de 2,0 à 5,0 fois dans chaque direction parmi une direction de machine (MD) et une direction transversale (TD) et sous un traitement de détente ultérieur à une température allant de 70 à 90 °C et à un taux de relaxation allant de 25 % à 45 % dans chaque direction parmi une direction de machine (MD) et une direction transversale (TD).

**2.** Film étiré multicouche thermorétractable pour pelliplacages selon la revendication 1, dans lequel le taux de récupération d'allongement dans chaque direction parmi la direction de machine (MD) et la direction transversale (TD) va de 90 % à 100 %, le taux de récupération d'allongement étant mesuré lors de l'étirement à un taux de tension de 500 mm/min à une température de 120 °C jusqu'à un déplacement de 130 % de l'allongement et un retour à la position initiale au même taux, le taux de récupération d'allongement étant calculé à partir du déplacement au moment où la charge a atteint zéro ($x_{zéro}$) en utilisant l'équation suivante :

$$\text{taux de récupération d'allongement (\%)} = (130-x_{zéro})/130 \times 100.$$

**3.** Film étiré multicouche thermorétractable pour pelliplacages selon la revendication 1 ou 2, dans lequel la couche de résine faisant barrière aux gaz est une couche comprenant une résine de chlorure de vinylidène.

**4.** Film étiré multicouche thermorétractable pour pelliplacages selon l'une quelconque des revendications 1 à 3, dans lequel la couche de résine réticulée est une couche comprenant une résine d'oléfine.

**5.** Pelliplacage comprenant :

un élément de fond ;

un article emballé disposé sur l'élément de fond ; et

le film étiré multicouche thermorétractable selon l'une quelconque des revendications 1 à 4,

le film étant agencé de manière à s'accrocher étroitement à l'article emballé.

**6.** Procédé pour la production d'un film étiré multicouche thermorétractable pour pelliplacages pour obtenir le film étiré multicouche thermorétractable selon l'une quelconque des revendications 1 à 4, le procédé comprenant l'application d'un traitement de relaxation dans des conditions de température de 70 à 90 °C et de taux de relaxation de 25 % à 45 % dans chaque direction parmi une direction de machine et une direction transversale, sur un film multicouche étiré ayant une couche de résine réticulée, une couche de résine faisant barrière aux gaz et une couche de résine de thermoscellage disposées successivement depuis un côté extérieur.

**EP 3 214 015 B1**

**REFERENCES CITED IN THE DESCRIPTION**

**Patent documents cited in the description**

- JP 56049206 A
- JP 57023607 A
- JP 6002485 A
- JP H9216319 B
- WO 2011138320 A
- EP 1176002 A1

- EP 1985444 A1
- JP 56049206 B
- JP 57023607 B
- JP 6002485 B
- JP H9216319 A